# EUROPÄISCHE PATENTSCHRIFT

(11) **EP 3 880 508 B1**
(45) Veröffentlichungstag und Bekanntmachung des Hinweises auf die Patenterteilung: **24.09.2025**
(21) Anmeldenummer: 19805272.2
(22) Anmeldetag: 15.11.2019
(51) Int. Cl.: B60L 53/14, B60L 53/16, B60L 53/30, B60L 53/35, B60L 53/36, B62D 25/20, B62D 25/24

(54) **UNTERBODENLADEEINHEIT SOWIE FAHRZEUG MIT EINER UNTERBODENLADEEINHEIT**
UNDERBODY CHARGING UNIT AND VEHICLE WITH AN UNDERBODY CHARGING UNIT
UNITÉ DE CHARGE SOUBASSEMENT ET VÉHICULE AVEC UNE UNITÉ DE CHARGE SOUBASSEMENT

(30) Priorität: 16.11.2018 DE 102018009010
(43) Veröffentlichungstag der Anmeldung: 22.09.2021
(73) Patentinhaber: Easelink GmbH, 8010 Graz (AT)
(72) Erfinder: LEIBETSEDER, Manuel, 8010 Graz (AT); BERNER, Philipp, 8010 Graz (AT); KÜHHAS, Martin, 8010 Graz (AT); STOCKINGER, Hermann, 8010 Graz (AT)
(74) Vertreter: Prinz & Partner mbB
(86) Internationale Anmeldenummer: PCT/EP2019/081500
(87) Internationale Veröffentlichungsnummer: WO 2020/099642

(56) Entgegenhaltungen:
- EP-A1- 2 039 557
- WO-A1-2017/054858
- DE-A1- 102011 090 205
- DE-A1- 102012 007 713
- DE-A1- 102016 121 355
- DE-A1- 102017 008 108
- DE-A1- 19 732 529
- US-A1- 2011 066 515
- US-A1- 2012 286 730

## Beschreibung

Die Erfindung betrifft eine Unterbodenladeeinheit, insbesondere für ein elektrisches Ladesystem für ein elektrisch angetriebenes Fahrzeug sowie ein Fahrzeug mit einer Unterbodenladeeinheit.

Für elektrisch angetriebene Fahrzeuge sind konduktive Ladesysteme bekannt, bei denen eine elektrische Leitung zwischen einem fahrzeugseitigen Teil (auch Fahrzeugkontakteinheit genannt) und einem ortsfest am Boden befestigten Teil (auch Bodenkontakteinheit genannt) automatisiert hergestellt wird.

Hierzu sind elektrische Kontakte üblicherweise am Unterboden des Fahrzeugs notwendig, die bei Bedarf mit den entsprechenden Kontaktflächen der Bodenkontakteinheit in Berührung gebracht werden können.

Unabhängig davon, ob sich vom Fahrzeug eine Fahrzeugkontakteinheit zur Bodenkontakteinheit hin bewegt oder ob die Bewegung von der Bodenkontakteinheit zum Fahrzeug hin erfolgt, ist es notwendig, die am Unterboden des Fahrzeugs vorgesehenen Kontakte während der Fahrt vor Verunreinigung zu schützen, um Verluste beim Laden zu vermeiden.

Aus der WO 2017/054858 A1 ist eine Unterbodenladeeinheit bekannt, die vom Unterboden eines Fahrzeugs mittels eines Aktuators abgesenkt werden kann, um einen elektrischen Kontakt mit einer Bodenladeeinheit herzustellen und eine Fahrzeugbatterie zu laden.

Die US 2011/066515 A1 zeigt eine Bodenkontakteinheit, die einen elektrischen Kontakt mit einer Unterbodenladeeinheit eines Fahrzeugs herstellen kann, um eine Batterie des Fahrzeugs zu laden. Die Bodenkontakteinheit ist in einer Grube angeordnet, die durch eine Abdeckung verschließbar ist.

Die DE 10 2016 121 355 A1 zeigt eine Unterbodenladeeinheit zur elektrischen Verbindung einer Fahrzeugkontakteinheit mit einer Bodenkontakteinheit einer elektrischen Ladeinfrastruktur. Die Unterbodenladeeinheit umfasst dabei einen Kontaktierungsaktuator, der die Fahrzeugkontakteinheit zur Bodenkontakteinheit hin und von ihr weg bewegen kann.

Ferner zeigt die DE 197 32 529 A1 einen Verschlussdeckel für eine Karosserieöffnung mit einer den Rand der Karosserieöffnung übergreifenden Dichtlippe sowie Rastmitteln zur Festlegung des Verschlussdeckels in der Karosserieöffnung und zumindest einer am Verschlussdeckel vorgesehenen Wasserauslauf-Öffnung zur Wasserableitung.

Des Weiteren ist aus der DE 10 2017 008 108 A1 eine Verschlussvorrichtung zum Verschließen einer Durchgangsöffnung in einer Fahrzeugkarosserie bekannt. Über die Durchgangsöffnung ist dabei ein Innenraum mit einer Befüllungs- oder Anschlusseinrichtung zugänglich.

Die US 2012/286730 A1 zeigt eine Unterbodenladeeinheit mit einem Roboter, der vom Fahrzeugboden aus abgeseilt wird und am Boden eine bodenseitige Kontakteinheit sucht und zu ihr hinfährt, um sich selbst an diese anzuschließen. Der Roboter ist über ein Kabel mit dem Fahrzeug verbunden. Der Unterbringungsraum wird über Klappen am Fahrzeug geschlossen, die mit Stiften verriegelt werden.

Die DE 10 2011 090205 A1 hat eine an der Karosserieseite vorgesehene Tankklappe zum Gegenstand, die auch bei Elektrofahrzeugen verwendet werden kann.

Es ist daher Aufgabe der Erfindung, eine Unterbodenladeeinheit sowie ein Fahrzeug bereitzustellen, bei dem Kontakte der Unterbodenladeeinheit während der Fahrt ausreichend geschützt sind.

Die Aufgabe wird gelöst durch eine Unterbodenladeeinheit, insbesondere für ein elektrisches Ladesystem für ein elektrisch angetriebenes Fahrzeug, mit einem Gehäuse, das eine Oberseite und eine Kontaktierungsöffnung aufweist, einer Abdeckung und einer Antriebsvorrichtung zur Betätigung der Abdeckung, und mit einer Fahrzeugkontakteinheit mit Kontakten, die im Gehäuse angeordnet ist und die Fahrzeugkontakteinheit durch die Kontaktierungsöffnung aus der Unterbodenladeeinheit bewegbar ist, wobei die Abdeckung in einer Schließposition die Kontaktierungsöffnung abdeckt und in einer Öffnungsposition die Kontaktierungsöffnung freigibt, und wobei die Antriebsvorrichtung dazu ausgebildet ist, die Abdeckung aus der Schließposition in die Öffnungsposition sowie aus der Öffnungsposition in die Schließposition automatisiert zu bewegen, wobei die Abdeckung in der Schließposition näher an der Oberseite liegt als in der Öffnungsposition. Die Antriebsvorrichtung ist hierbei dazu ausgebildet, die Abdeckung von der Antriebsvorrichtung rotatorisch um eine Drehachse zu bewegen. Die Unterbodenladeeinheit weist einen Sensor auf, der dazu ausgebildet ist zu erkennen, ob die Abdeckung in der Schließposition ist . Es ist ein Kontaktierungsaktuator in Form eines pneumatisch betriebenen Faltenbalgs vorgesehen, der die Unterbodenladeeinheit durch die Kontaktierungsöffnung nach unten aus dem Gehäuse heraus bewegt, bis die Fahrzeugkontakteinheit eine Bodenkontakteinheit kontaktiert, um einen geschlossenen Stromkreis zum Laden des Fahrzeugs herzustellen.

Die Oberseite des Gehäuses ist dabei diejenige Seite, die in vorgesehener Montageposition der Unterbodenladeeinheit oben liegt, z.B. am nächsten zu einem Dach des Fahrzeugs. Die Oberseite des Gehäuses kann auch offen oder teilweise geöffnet sein.

Die Kontaktierungsöffnung ist insbesondere an der Oberseite entgegengesetzten Unterseite, d.h. der vom Fahrzeug abgewandten Seite des Gehäuses vorgesehen.

Die Lage der Abdeckung gegenüber der Oberseite des Gehäuses kann zum Beispiel durch die Position des Massenschwerpunktes der Abdeckung definiert sein.

Beispielsweise liegt die Abdeckung in der Schließposition um einen Abstand näher an der Oberseite als in der Öffnungsposition, wobei der Abstand größer als die Dicke der Abdeckung in vertikaler Richtung ist.

Dadurch, dass die Kontaktierungsöffnung in der Schließposition durch die Abdeckung verdeckt ist, sind das Gehäuseinnere und damit die dort vorhandenen Kontakte, mechanisch geschützt. Außerdem ist dadurch, dass die Abdeckung automatisiert von der Schließposition in die Öffnungsposition und von der Öffnungsposition in die Schließposition bewegt werden kann, kein mühsamer Eingriff eines Benutzers des Fahrzeugs notwendig.

Insbesondere ist die Kontaktierungsöffnung von der Abdeckung in der Schließposition zumindest teilweise, insbesondere vollständig bedeckt. Die Abdeckung kann in der Schießposition mechanisch arretiert sein.

"Freigeben" bedeutet im Rahmen dieser Erfindung, dass die Kontaktierungsöffnung größtenteils, insbesondere zu mehr als 80 % zugänglich ist.

Zum Beispiel ist die Abdeckung in der Öffnungsposition parallel zum Gehäuse angeordnet.

Die Unterbodenladeeinheit ist vorzugsweise am Fahrzeugunterboden des elektrisch angetriebenen Fahrzeugs vorgesehen. Die Bewegung der Abdeckung erfolgt vorzugsweise parallel zum Fahrzeugunterboden bzw. zu einer Unterseite des Gehäuses. Beispielsweise ist die Antriebsvorrichtung im Gehäuseinneren vorgesehen.

Zum Beispiel weist die Unterbodenladeeinheit Kontakte zum Laden des Fahrzeugs auf, die in der Schließposition von der Abdeckung abgedeckt werden. Die Kontakte können mit Gegenkontakten - wie Kontaktflächen einer Bodenkontakteinheit - in elektrischen Kontakt gebracht werden, um das Fahrzeug zu laden. Durch die Kontaktierungsöffnung kann eine Fahrzeugkontakteinheit, die die Kontakte trägt, bewegt werden, zum Beispiel aus dem Gehäuseinneren heraus. Alternativ kann durch die Kontaktierungsöffnung eine Bodenkontakteinheit mit Kontaktflächen in das Gehäuseinnere hinein bewegt werden, um die Kontakte zu kontaktieren.

Beispiele für elektrisch angetriebene Fahrzeuge sind batteriebetriebene Fahrzeuge (BEV), Plug-in-Hybridfahrzeuge (PHEV) und Brennstoffzellenfahrzeuge (FCEV).

In einer Ausgestaltung der Erfindung weist das Gehäuse mehrere Teile, wie Halbschalen auf und hat zum Beispiel ein Zweiboxdesign. Das Gehäuse kann zusätzlich zur Kontaktierungsöffnung weitere Öffnung aufweisen, wie Lüftungsöffnungen.

Zum Beispiel ist die Antriebsvorrichtung dazu ausgebildet, die Abdeckung sowohl in vertikaler Richtung, z.B. durch eine translatorische Bewegung, als auch in horizontaler Richtung, z.B. durch rotatorische Bewegung, zu bewegen.

Die Bewegungen in vertikaler Richtung und in horizontaler Richtung können, müssen aber nicht getrennt voneinander sein, wie bei einer Schwenkbewegung.

In einer Ausführungsform der Erfindung ist die Antriebsvorrichtung dazu ausgebildet, die Abdeckung von der Antriebsvorrichtung translatorisch zu bewegen, insbesondere wobei die Antriebsvorrichtung dazu ausgebildet ist, die Abdeckung zunächst translatorisch in eine Translationsrichtung vom Gehäuseinneren weg zu bewegen und die Abdeckung anschließend rotatorisch um eine Drehachse in die Öffnungsposition zu bewegen, um die Abdeckung aus der Schließposition in die Öffnungsposition zu überführen. Auf diese Weise kann der Platz, der zur Bewegung der Abdeckung von der Schließposition in die Öffnungsposition benötigt wird, minimal gehalten werden. Insbesondere sind keine raumintensiven Schwenkbewegungen um eine Schwenkachse parallel zum Fahrzeugunterboden notwendig.

Vorzugsweise verlaufen die Drehachse und/oder die Translationsrichtung senkrecht zur Abdeckung und/oder zur Kontaktierungsöffnung, um den benötigten Platz weiter zu reduzieren.

Dabei ist insbesondere die Drehachse parallel zur Translationsrichtung. Die Abdeckung kann bei der rotatorischen Bewegung stets parallel zum Gehäuse liegen, insbesondere zur Außenfläche oder zur Unterbodenebene.

In einer weiteren Ausführungsform weist die Abdeckung mehrere Abdeckungsteile auf, die relativ zueinander bewegbar sind, insbesondere einander überlappen. Dadurch kann der benötigte Bauraum, der für die Abdeckung in der Öffnungsposition notwendig ist, verringert werden. Die Abdeckung kann zum Beispiel als Irisblende ausgeführt sein.

Um die Antriebseinheit durch die Abdeckung zu schützen, kann die Abdeckung eine Außenseite und eine Innenseite aufweisen, wobei die Abdeckung auf der Innenseite mit der Antriebsvorrichtung verbunden ist. Dabei kann die Außenseite die vom Gehäuseinneren abgewandte Seite und die Innenseite die dem Gehäuseinneren zugewandte Seite der Abdeckung sein.

Ein Aspekt der Erfindung sieht vor, dass die Kontaktierungsöffnung durch einen Randbereich des Gehäuses begrenzt ist, wobei die Unterbodenladeeinheit eine Dichtlippe aufweist, die in der Schließposition zwischen der Abdeckung und dem Randbereich angeordnet ist und die die Kontaktierungsöffnung umläuft, insbesondere vollständig umläuft, wodurch das Gehäuseinnere in der Schließposition zuverlässig geschützt ist. Zum Beispiel können in der Schließposition aufgrund der Dichtlippe keine Flüssigkeiten und/oder Schmutz in das Gehäuseinnere gelangen.

Zum Beispiel ist die Dichtlippe aus Gummi, Filz und/oder ein Wulst, eine Lamelle, ein Hohlprofil oder ein Bürste. Die Dichtlippe kann in der Schließposition axial zwischen Abdeckung und Randbereich liegen und/oder sie kann am Randbereich oder an der Abdeckung befestigt sein.

Im Falle einer zweiteiligen Dichtlippe kann die Dichtlippe auch am Randbereich und an der Abdeckung befestigt sein.

In einer weiteren Ausgestaltung der Erfindung weist die Unterbodenladeeinheit eine Führung, insbesondere eine Kulisse und/oder ein Wellenlager auf, die die Bewegung der Abdeckung führt, wodurch eine zuverlässige Bewegung der Abdeckung gewährleistet wird.

Um die Lebensdauer der Unterbodenladeeinheit zu verbessern, kann die Dichtlippe in der Schließposition die Führung umlaufen.

In einer weiteren Ausführungsform weist das Gehäuse eine Außenfläche mit einer Vertiefung auf, wobei die Kontaktierungsöffnung in der Vertiefung vorgesehen ist, insbesondere wobei die Abdeckung die gleiche Kontur wie die Vertiefung hat. Dadurch kann eine Aufnahme, insbesondere mit Anschlägen für die Abdeckung in der Schließposition bereitgestellt werden.

Die Außenfläche ist insbesondere an einer Unterseite der Unterbodenladeeinheit vorgesehen.

In einer platzsparenden Konstruktion hat die Vertiefung einen Boden, wobei zumindest Teile vom Boden einen Randbereich des Gehäuses bilden, der die Kontaktierungsöffnung begrenzt.

Der Boden der Vertiefung ist insbesondere gegenüber der Außenfläche zum Gehäuseinneren hin versetzt. In der Vertiefung, insbesondere im Boden der Vertiefung können weitere Öffnung, wie eine Funktionsöffnung für die Antriebsvorrichtung und/oder eine Lüftungsöffnung, vorgesehen sein.

Vorzugsweise ist die Abdeckung in der Schließposition vollständig in der Vertiefung aufgenommen, wodurch der Luftwiderstand während er Fahrt verringert wird.

Beispielsweise schließt die Außenseite der Abdeckung in der Schließposition bündig mit der Außenfläche ab.

Um die Antriebseinheit vor Verschmutzung zu schützen, kann die Antriebsvorrichtung im Bereich der Vertiefung im Gehäuseinneren vorgesehen sein, insbesondere bei einer Ansicht senkrecht auf Öffnung.

In einer Ausführungsform der Erfindung weist die Antriebsvorrichtung wenigstens eine Baugruppe zur Erzeugung der Bewegung der Abdeckung auf, insbesondere weist die Antriebsvorrichtung eine erste Baugruppe zur Erzeugung der translatorischen Bewegung und eine zweite Baugruppe zur Erzeugung der rotatorischen Bewegung auf. Auf diese Weise kann die Antriebsvorrichtung mit Standardkomponenten konstruiert werden.

In einer Ausführungsvariante weist die Antriebsvorrichtung eine erste Kulisse und eine davon verschiedene zweite Kulisse aufweist, in denen ein gemeinsamer Führungsbolzen geführt ist, wobei die erste Kulisse gegenüber der zweiten Kulisse bewegbar ist, sodass komplexe Bewegungsabläufe der Abdeckung möglich sind.

In diesem Falle ist insbesondere lediglich eine Baugruppe und/oder ein Elektromotor der Antriebseinheit notwendig. Der komplexe Bewegungsablauf kann zum Beispiel eine im wesentlichen translatorische Bewegung und eine davon getrennte im wesentlichen rotatorische Bewegung umfassen.

Vorzugsweise ist die Abdeckung am Führungsbolzen befestigt.

In einer Ausführungsvariante ist die erste Kulisse an einem Kulissenbauteil und die zweite Kulisse an einer Kulissenwand vorgesehen, wobei die Kulissenwand das Kulissenbauteil in Umfangsrichtung umgibt, und wobei das Kulissenbauteil gegenüber der Kulissenwand rotierbar ist oder umgekehrt, wodurch die Relativbewegung der Kulissen einfach realisiert ist.

Das Kulissenbauteil ist vorzugsweise zylindrisch oder kegelförmig und kann auch hohl ausgeführt sein.

Zum Beispiel ist die Kulissenwand gegenüber dem Gehäuse ortsfest und/oder das Kulissenbauteil kann von einem Elektromotor angetrieben werden.

In einer weiteren Ausführungsform der Erfindung weist die Unterbodenladeeinheit eine Verschlussvorrichtung zur Arretierung der Abdeckung in der Schließposition auf, insbesondere wobei die Verschlussvorrichtung in Bezug auf die Kontaktierungsöffnung im Wesentlichen diametral gegenüber der Antriebsvorrichtung angeordnet ist. Durch die Verschlussvorrichtung kann die Abdeckung sicher in der Schließposition arretiert werden.

Zum Beispiel ist die Verschlussvorrichtung im Gehäuseinneren angeordnet. Auch kann die Verschlussvorrichtung in der Abdeckung integriert sein.

Beispielsweise können an den Teilen der Abdeckung bzw. an verschiedenen Abdeckungsteilen Verschlussmittel befestigt sein, die in der Schließposition ineinander eingreifen.

Zudem kann die Dichtlippe in der Schließposition der Abdeckung auch die Verschlussvorrichtung umlaufen.

Beispielsweise weist die Abdeckung einen Verschlussbereich, insbesondere eine Verschlussvertiefung mit einem Hinterschnitt auf, der in der Schließposition im Bereich der Verschlussvorrichtung angeordnet ist, insbesondere weist die Verschlussvorrichtung ein Verriegelungselement auf, das in den Verschlussbereich, insbesondere den Hinterschnitt eingreift. Auf diese Weise kann eine einfache aber mechanisch sichere Arretierung erreicht werden.

Um den Hinterschnitt sicher zu greifen, kann das Verriegelungselement einen länglichen Grundkörper und eine Lippe aufweisen, wobei die Lippe an dem der Abdeckung zugewandten Ende des Grundkörpers vorgesehen ist. Die Lippe umläuft Grundkörper in Umfangsrichtung vorzugsweise nur teilweise.

Die Kontaktierungsöffnung hat insbesondere die Form der Außenkontur der Fahrzeugkontakteinheit.

Beispielsweise liegt die Abdeckung in der Schließposition an der Fahrzeugkontakteinheit an und arretiert die Fahrzeugkontakteinheit und/oder die Abdeckung ist dazu ausgebildet, die Kontakte bei der Bewegung zu reinigen und/oder die Abdeckung ist elektrisch leitfähig und schließt in der Schließposition die Kontakte elektrisch kurz. Dadurch kann die Abdeckung weitere Funktionen erfüllen, sodass Kosten reduziert werden können.

Die Abdeckung kann mit dem Erdpotential des Fahrzeugs verbunden sein, sodass Kontakte in der Schließposition durch die Abdeckung geerdet sind.

Um zu verhindern, dass sich die Abdeckung während der Fahrt löst, kann die Abdeckung in der Schließposition an wenigstens einem Anschlag der Unterbodenladeeinheit anliegen, insbesondere an einem Anschlag entgegen der Fahrtrichtung und/oder einem Anschlag oberhalb der Abdeckung.

In einer weiteren Ausführungsform der Erfindung weist das Gehäuse eine Außenfläche auf, wobei an der Außenfläche wenigstens eine Reinigungsvorrichtung, insbesondere eine Reinigungslamelle derart vorgesehen ist, dass die Innenseite der Abdeckung zumindest teilweise, insbesondere vollständig von der Reinigungsvorrichtung gereinigt wird, wenn die Abdeckung von der Öffnungsposition in die Schließposition und/oder von der Schließposition in die Öffnungsposition bewegt wird. Auf diese Weise wird beispielweise zuverlässig verhindert, dass beim Schließen Schmutz, der in der Öffnungsposition auf die Innenseite der Abdeckung gelangt ist, in das Gehäuseinnere befördert wird.

Die Reinigungsvorrichtung erstreckt sich zum Beispiel parallel zur Fahrtrichtung, um den Strömungswiderstand zu verringern.

Beispielsweise kann die Reinigungsvorrichtung als Bürste, Lippe oder Leiste ausgeführt sein.

Die horizontale Bewegung verläuft zum Beispiel zumindest teilweise senkrecht zur Reinigungsvorrichtung, sodass die Reinigungsvorrichtung die Innenseite vollständig abfährt.

Ferner wird die Aufgabe gelöst durch ein Fahrzeug mit einer Unterbodenladeeinheit wie zuvor beschrieben, wobei die Unterbodenladeeinheit unterhalb des Fahrzeugs, insbesondere am Fahrzeugunterboden vorgesehen ist. Die zur Unterbodenladeeinheit aufgezählten möglichen Ausgestaltungen und sowie die Vorteile gelten für das Fahrzeug gleichermaßen.

Beispielsweise spannt der Fahrzeugunterboden eine Unterbodenebene auf, wobei die Abdeckung in der Öffnungsposition und/oder der Schließposition auf der dem Fahrzeug zugewandten Seite der Unterbodenebene liegt. Dadurch werden die Abmessungen des Fahrzeugs durch die Unterbodenladeinheit nicht vergrößert.

Die Abdeckung kann vollständig auf der dem Fahrzeug zugewandten Seite der Unterbodenebene liegen, insbesondere in Position zwischen der Schließposition und der Öffnungsposition, d.h. während der Bewegung der Abdeckung.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Figur 1 ein erfindungsgemäßes Fahrzeug mit einer erfindungsgemäßen Unterbodenladeeinheit schematisch,
- Figur 2 eine schematische Prinzipskizze der Unterbodenladeeinheit gemäß Figur 1,
- Figur 3 eine perspektivische Ansicht auf die Unterbodenladeeinheit gemäß Figur 1,
- Figur 4 eine Ausführungsform einer Abdeckung der Unterbodenladeeinheit gemäß Figur 3,
- die Figuren 5a bis 5c eine Schnittansicht durch die Unterbodenladeeinheit gemäß Figur 2 in verschiedenen Positionen der Abdeckung,
- Figur 6 eine Schnittansicht einer Antriebsbaugruppe der Unterbodenladeeinheit gemäß Figur 2,
- Figur 7 eine Schnittansicht einer Verschlussvorrichtung der Unterbodenladeeinheit gemäß Figur 2,
- die Figuren 8a bis 8d eine zweite Ausführungsform einer Antriebsvorrichtung für eine erfindungsgemäße Unterbodenladeeinheit,
- die Figuren 9a bis 9d die Kulissen der zweiten Ausführungsform gemäß Figur 8 während verschiedenen Positionen beim Öffnen der Abdeckung,
- Figur 10 eine schematische Darstellung einer dritten erfindungsgemäßen Ausführungsform einer Antriebsvorrichtung der Unterbodenladeeinheit,
- die Figuren 11a und 11b eine weitere Ausführungsform einer Abdeckung der erfindungsgemäßen Unterbodenladeeinheit gemäß Figur 2 in Schließposition bzw. Öffnungsposition, und
- die Figuren 12a und 12b eine weitere Ausführungsform einer Abdeckung einer erfindungsgemäßen Unterbodenladeeinheit gemäß Figur 2 in Schließposition bzw. Öffnungsposition.

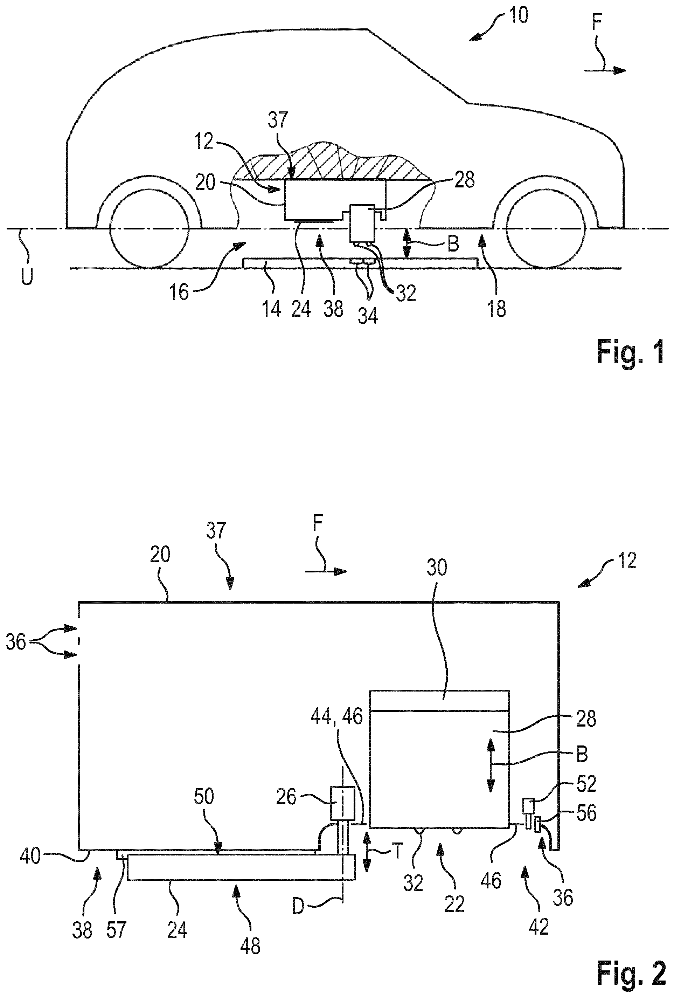

In Figur 1 ist äußerst schematisch ein Fahrzeug 10 mit einer Unterbodenladeeinheit 12 dargestellt.

Das Fahrzeug 10 ist oberhalb einer Bodenkontakteinheit 14 abgestellt, wobei die Unterbodenladeeinheit 12 und die Bodenkontakteinheit 14 ein elektrisches Ladesystem 16 für das Fahrzeug 10 bilden.

Das Fahrzeug 10 ist ein elektrisch angetriebenes Fahrzeug, z. B. ein batteriebetriebenes elektrisches Fahrzeug (BEV), ein Plug-in-Hybrid (PHEV) oder ein Brennstoffzellenfahrzeug (FCEV).

Das Fahrzeug 10 weist einen Fahrzeugunterboden 18 auf, an dem die Unterbodenladeeinheit 12 befestigt ist. Die Unterbodenladeeinheit 12 befindet sich somit unterhalb des übrigen Fahrzeugs 10 (mit Ausnahme der Räder des Fahrzeugs).

Der Fahrzeugunterboden 18 definiert eine Unterbodenebene U, wobei das Fahrzeug 10 (mit Ausnahme der Räder) oberhalb der Unterbodenebene U liegt. Diese Seite wird auch als die dem Fahrzeug 10 zugewandte Seite der Unterbodenebene U bezeichnet.

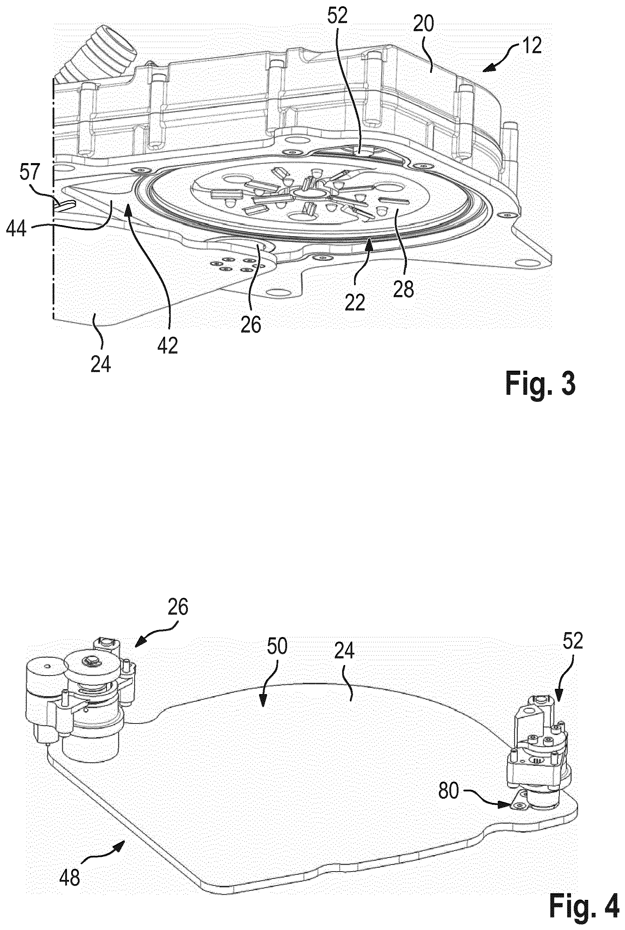

In den Figuren 2 und 3 ist die Unterbodenladeeinheit 12 vergrößert dargestellt.

Die Unterbodenladeeinheit 12 weist ein Gehäuse 20 mit einer Kontaktierungsöffnung 22, eine Abdeckung 24, eine Antriebsvorrichtung 26 sowie eine Fahrzeugkontakteinheit 28 auf.

Die Fahrzeugkontakteinheit 28 ist im Gehäuseinneren, d. h. im Inneren des Gehäuses 20, vorgesehen und kann mittels eines Kontaktierungsaktuators 30 der Unterbodenladeeinheit 12 durch die Kontaktierungsöffnung 22 nach unten aus dem Gehäuse 20 hinausbewegt werden. Die Bewegung erfolgt so weit, dass die Fahrzeugkontakteinheit 28 die Bodenkontakteinheit 14 kontaktiert, genauer gesagt, dass Kontakte 32 der Fahrzeugkontakteinheit Kontaktflächen 34 der Bodenkontakteinheit 14 berühren, um einen geschlossenen Stromkreis zum Laden des Fahrzeugs 10 herzustellen.

Die Kontaktierungsöffnung 22 hat dabei die gleiche Kontur und Größe wie die Außenkontur der Fahrzeugkontakteinheit 28, sodass die Kontaktierungsöffnung 22 so klein wie möglich ausgeführt ist.

Solche Fahrzeugkontakteinheiten 28 mit Kontaktierungsaktuatoren 30, die beispielsweise ein pneumatisch betriebener Faltenbalg sein können, sind aus dem Stand der Technik bekannt.

Das Gehäuse 20 kann mehrere Teile aufweisen, z. B. kann es aus zwei Halbschalen hergestellt sein bzw. ein Zweiboxdesign haben.

Außerdem kann das Gehäuse 20 auch weitere Öffnungen 36 aufweisen, die beispielsweise Lüftungsöffnungen sind und zur Belüftung des Gehäuseinneren dienen.

Das Gehäuse 20 hat eine Oberseite 37 und eine Unterseite 38.

Die Oberseite 37 ist diejenige Seite des Gehäuses 20, die in der vorgesehenen Montageposition der Unterbodenladeeinheit 12, die z.B. in Figur 1 gezeigt ist, oben liegt, also zum Beispiel einem Fahrzeugdach zugewandt ist.

Die Unterseite 38 weist vom Fahrzeug 10 weg und ist dem Untergrund zugewandt, wenn die Unterbodenladeeinheit 12 am Fahrzeug 10 ordnungsgemäß montiert ist. Auf der Unterseite 38 hat das Gehäuse 20 eine Außenfläche 40, die beispielsweise die äußere Oberfläche einer Wand des Gehäuses 20 ist.

Auf der Unterseite 38 ist außerdem eine Vertiefung 42 mit einem Boden 44 ausgebildet. Der Boden 44 ist beispielsweise parallel zur übrigen Außenfläche 40 und/oder zur Unterbodenebene U.

Außerdem kann der Boden 44 zum übrigen Fahrzeug 10 hin, d. h. nach oben, gegenüber der übrigen Außenfläche 40 versetzt sein.

Im Boden 44 ist die Kontaktierungsöffnung 22 vorgesehen, d. h., dass Teile des Bodens 44 einen Randbereich 46 bilden, der die Kontaktierungsöffnung 22 begrenzt. Im Boden 44 können ebenso weitere Öffnungen 36, beispielsweise Lüftungsöffnungen vorgesehen sein.

Die Abdeckung 24 ist im gezeigten ersten Ausführungsbeispiel plattenförmig ausgeführt, wobei die Kontur der Abdeckung 24 im Wesentlichen der Kontur der Vertiefung 42 entspricht.

Außerdem ist die Dicke bzw. Stärke der Abdeckung 24 im Wesentlichen so groß, wie der Boden 44 von der übrigen Außenfläche 40 versetzt ist.

Wie in Figur 4 zu erkennen ist, weist die Abdeckung 24 eine Außenseite 48 und eine Innenseite 50 auf.

Die Außenseite 48 ist vom Gehäuse 20 weggewandt, wohingegen die Innenseite dem Gehäuse 20 zugewandt ist.

An der Innenseite 50 ist z. B. die Antriebsvorrichtung 26 mit der Abdeckung 24 verbunden. Auch kann eine Verschlussvorrichtung 52 der Unterbodenladeeinheit 12 über die Innenseite 50 an der Abdeckung 24 angreifen.

Wie in Figur 4 zu erkennen ist, liegt die Stelle an der Innenseite 50 der Abdeckung 24, an der die Antriebsvorrichtung 26 mit der Abdeckung 24 verbunden ist, und die Stelle, an der die Verschlussvorrichtung 52 an der Abdeckung 24 angreift, einander diametral in Bezug auf die Kontaktierungsöffnung 22 und/oder die Drehachse D gegenüber.

Die Abdeckung 24 kann aus Metall hergestellt sein, oder an der Innenseite 50 eine leitfähige Beschichtung aufweisen.

Die Antriebsvorrichtung 26 ist im Gehäuseinneren vorgesehen und im Bereich der Vertiefung 42 angeordnet. Dies bedeutet, dass bei einer Ansicht senkrecht auf die Kontaktierungsöffnung 22 die Antriebsvorrichtung 26 in der Vertiefung 42 liegt.

Die Antriebsvorrichtung 26 ist durch eine Funktionsöffnung - zum Beispiel eine weitere Öffnung 36 - im Boden 44 mit der Innenseite 50 der Abdeckung 24 verbunden.

Ebenso ist die Verschlussvorrichtung 52 im Gehäuseinneren vorgesehen und im Bereich der Vertiefung 42 angeordnet. Auch die Verschlussvorrichtung 52 kann über eine Funktionsöffnung - zum Beispiel eine weitere Öffnung 36 - im Boden 44 mit der Innenseite 50 der Abdeckung 24 zusammenwirken.

Im Randbereich 46 ist zudem eine Dichtlippe 54 vorgesehen, die zumindest die Kontaktierungsöffnung 22 in einer Sicht senkrecht auf die Kontaktierungsöffnung 22 vollständig umläuft.

Die Dichtlippe 54 ist beispielsweise aus Gummi oder Filz und kann als Wulst, Hohlprofil oder Bürste ausgeführt sein. Alternativ oder zusätzlich kann auch an der Abdeckung 24, insbesondere der Innenseite 50, die Dichtlippe 54 oder eine weitere Dichtlippe angeordnet sein.

Außerdem ist in der gezeigten Ausführungsform am Gehäuse 20 eine Reinigungsvorrichtung 57 vorgesehen, hier in Form einer Reinigungslamelle.

Die Reinigungsvorrichtung 57 ist an der Unterseite 38, zum Beispiel an der Außenfläche 40 des Gehäuses 20 befestigt.

Die Reinigungsvorrichtung 57 erstreckt sich parallel zur Fahrtrichtung F und ist derart angeordnet, dass die Innenseite 50 der Abdeckung 24 zumindest teilweise, insbesondere vollständig über die Reinigungsvorrichtung 57 streift, wenn die Abdeckung 24 von der Öffnungsposition in die Schließposition und/oder von der Schließposition in die Öffnungsposition bewegt wird.

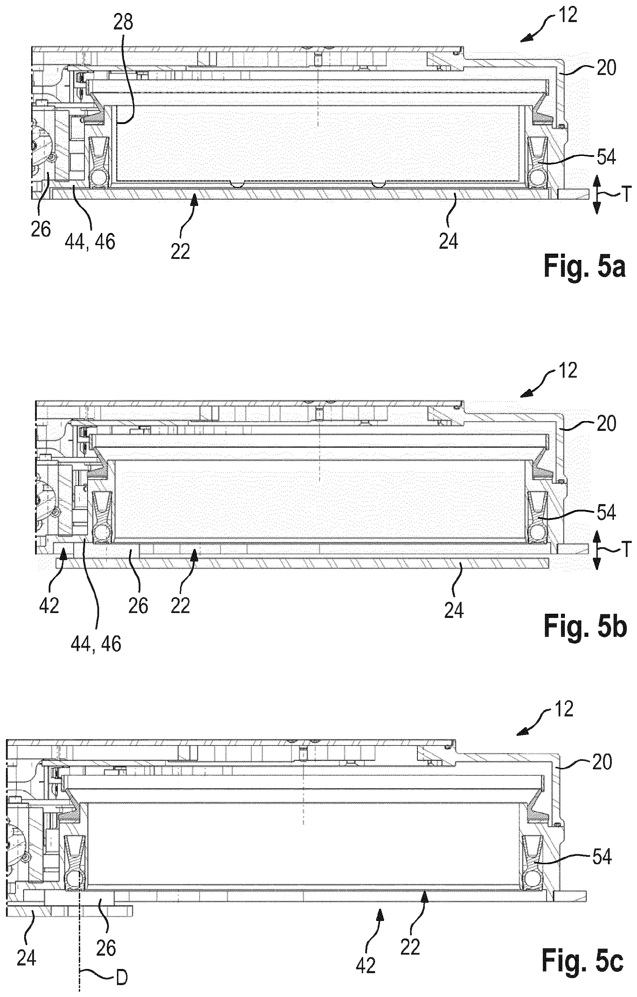

Wie in den Figuren 5a bis 5c zu sehen, in denen eine detailliertere Schnittansicht durch das Gehäuse 20 dargestellt ist, kann die Abdeckung 24 gegenüber dem Gehäuse 20 verschiedene Positionen einnehmen.

In Figur 5a ist die als Schließposition bezeichnete Stellung dargestellt, in der die Abdeckung 24 die Kontaktierungsöffnung 22 vollständig bedeckt und somit verschließt, sodass das Gehäuseinnere mechanisch geschützt ist.

Zum Beispiel liegt die Abdeckung 24 in der Schließposition vollständig in der Vertiefung 42, sodass die Außenseite 48 der Abdeckung 24 mit der Außenfläche 40 bündig abschließt. Die Dichtlippe 54 liegt dabei axial zwischen der Abdeckung 24 und dem Randbereich 46, sodass keine Flüssigkeiten und/oder Schmutz in das Gehäuseinnere gelangen können.

In der Schließposition ist das Gehäuseinnere somit mechanisch geschützt.

Außerdem bildet der Randbereich 46 bzw. der Boden 44 einen Anschlag oberhalb der Abdeckung 24 für die Abdeckung 24.

Dabei bildet die Stufe zwischen der Außenfläche 40 und dem Boden 44 einen Anschlag für die Abdeckung 24 entgegen der Fahrtrichtung F, an dem die Abdeckung 24 anliegt, sodass die Abdeckung 24 auch bei starken Erschütterungen während der Fahrt nicht gegenüber dem Gehäuse 20 bewegt wird.

Außerdem kann die Abdeckung 24 in der Schließposition mechanisch arretiert sein, beispielsweise durch die Verschlussvorrichtung 52, wie im Folgenden noch erläutert werden wird.

Im Gehäuseinneren hinter der Kontaktierungsöffnung 22 ist die Fahrzeugkontakteinheit 28 mit ihren Kontakten 32 angeordnet (in Figur 5a gestrichelt dargestellt), sodass die Abdeckung 24 die Kontakte 32 der Fahrzeugkontakteinheit 28 abdeckt.

Dabei können die Kontakte 32 die Innenseite 50 berühren, sodass die Kontakte 32 elektrisch kurzgeschlossen werden, insbesondere mit dem Erdpotential verbunden werden.

Hierzu kann die Abdeckung 24 aus einem leitfähigen Material sein oder auf der Innenseite 50 eine elektrisch leitfähige Beschichtung aufweisen. Die Abdeckung 24 und/oder die leitfähige Beschichtung sind dann mit dem Erdpotential verbunden.

Über eine Zwischenposition, die in Figur 5b dargestellt ist, kann die Abdeckung 24 von der Antriebsvorrichtung 26 automatisiert in ihre Öffnungsposition überführt werden, die in Figur 5c dargestellt ist.

In der Öffnungsposition ist die Kontaktierungsöffnung 22 freigegeben, d. h. in einer Unteransicht auf die Unterbodenladeeinheit 12 ist die Kontaktierungsöffnung 22 in der Öffnungsposition zu wenigstens 80 %, insbesondere vollständig zu sehen.

In der Öffnungsposition kann dann die Fahrzeugkontakteinheit 28 durch die Kontaktierungsöffnung 22 mittels des Kontaktierungsaktuators 30 verfahren werden, wie in den Figuren 1 und 2 angedeutet ist.

Wie bei einem Vergleich der Figuren 5a und 5c gut zu erkennen ist, liegt die Abdeckung 24 in der Schließposition um einen Abstand näher an der Oberseite 37 als in der Öffnungsposition. Der Versatz zwischen der Öffnungsposition und der Schließposition ist dabei größer als die Dicke der Abdeckung 24 in vertikaler Richtung.

Die Bewegung von der Schließposition in die Öffnungsposition und von der Öffnungsposition in die Schließposition wird von der Antriebsvorrichtung 26 automatisiert erzeugt.

Die horizontale Bewegung zur Freigabe der Kontaktierungsöffnung 22 erfolgt dabei im Wesentlichen parallel zum Fahrzeugunterboden 18 bzw. der Unterbodenebene U.

Im gezeigten Ausführungsbeispiel, wie auch in Figur 1 zu erkennen ist, liegt die Abdeckung 24 sowohl in der Öffnungsposition als auch in der Schließposition und in den Positionen dazwischen auf der dem Fahrzeug zugewandten Seite der Unterbodenebene U.

Die Abdeckung 24 kann derart ausgebildet sein, beispielsweise durch das Vorsehen von Reinigungsmitteln an der Innenseite 50, dass die Kontakte 32 der Fahrzeugkontakteinheit 28 bei der Bewegung der Abdeckung 24 gereinigt werden.

Außerdem kann die Unterbodenladeeinheit 12 einen Sensor 56 aufweisen, der die Position der Abdeckung 24 detektiert. Insbesondere ist der Sensor 56 dazu ausgebildet, zu überprüfen, ob die Abdeckung 24 in der Schließposition ist.

Der Sensor 56 ist beispielsweise ein optischer Sensor oder ein Kontaktsensor.

Die Bewegung von der Schließposition gemäß Figur 5a zur Öffnungsposition gemäß Figur 5c erfolgt zunächst durch eine translatorische Bewegung in eine Translationsrichtung T.

Die Translationsrichtung T steht insbesondere senkrecht auf der Kontaktierungsöffnung 22 und kann mit der Bewegungsrichtung B der Fahrzeugkontakteinheit 28 übereinstimmen.

Die vertikale Bewegung der Abdeckung 24, hier eine translatorische Bewegung, erfolgt zunächst vom Gehäuseinneren weg, d. h. auf die Unterbodenebene U zu, bis die Abdeckung die Vertiefung 42 vollständig verlassen hat. Diese Stellung ist in Figur 5b dargestellt.

Anschließend erfolgt eine horizontale Bewegung, beispielweise eine rotatorische Bewegung um eine Drehachse D, die ebenfalls von der Antriebsvorrichtung 26 erzeugt wird. Die Drehachse D verläuft parallel zur Translationsrichtung T und steht somit ebenfalls senkrecht auf die Kontaktierungsöffnung 22 und die Abdeckung 24.

Die Abdeckung 24 wird verdreht, bis die Öffnungsposition in Figur 5c erreicht ist.

Die horizontale Bewegung der Abdeckung 24 verläuft dabei derart parallel, dass die Abdeckung 24 stets parallel zum Fahrzeugunterboden 18 bzw. zur Unterbodenebene U und auch zur Außenseite 48 des Gehäuses 20 ist.

Insbesondere ist die Abdeckung 24 in ihrer Öffnungsposition parallel zur Außenseite 48 des Gehäuses 20 angeordnet.

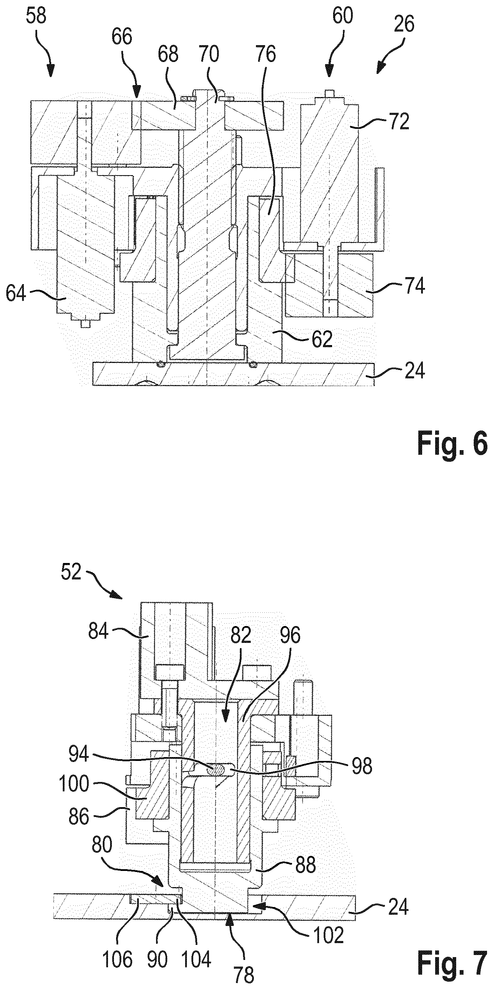

Eine Ausführungsform der Antriebsvorrichtung 26, die sowohl die translatorische Bewegung als auch die rotatorische Bewegung bereitstellt, ist in Figur 6 im Schnitt gezeigt.

Die Antriebsvorrichtung 26 weist eine erste Baugruppe 58 zur Erzeugung der translatorischen Bewegung und eine zweite Baugruppe 60 zur Erzeugung der rotatorischen Bewegung sowie ein Befestigungsstück 62 auf.

Mittels des Befestigungsstücks 62 ist die Antriebsvorrichtung 26 an der Abdeckung 24 befestigt.

Die erste Baugruppe 58 weist einen ersten Elektromotor 64, eine erste Getriebestufe 66 sowie ein Schraubgetriebe 68 mit einem verschiebbaren Bauteil 70 auf.

Das Schraubgetriebe 68 ist beispielsweise ein Spindeltrieb, wobei das verschiebbare Bauteil 70 eine Gewindespindel sein kann. Der Spindeltrieb selbst, d. h. das Schraubgetriebe 68 kann die Getriebestufe 66 darstellen.

Das verschiebbare Bauteil 70, in der gezeigten Ausführungsform die Gewindespindel, ist mit dem Befestigungsstück 62 fest verbunden.

Durch Betrieb des ersten Elektromotors 64 wird das Schraubgetriebe 68 betätigt, wodurch das Befestigungsstück 62 und damit die daran befestigte Abdeckung 24 in Translationsrichtung T bewegt wird.

Die zweite Baugruppe 60 weist einen zweiten Elektromotor 72 mit einem motorseitigen Zahnrad 74 und ein abdeckungsseitiges Zahnrad 76 auf, das drehfest mit dem Befestigungsstück 62 verbunden ist.

Insbesondere erstreckt sich das verschiebbare Bauteil 70, z. B. die Gewindespindel, durch das abdeckungsseitige Zahnrad 76.

In diesem Falle verläuft die Drehachse D durch die Gewindespindel bzw. das verschiebbare Bauteil 70. Das abdeckungsseitige Zahnrad 76 ist damit konzentrisch mit dem verschiebbaren Bauteil 70 angeordnet bzw. es umläuft das verschiebbare Bauteil 70 in Umfangsrichtung vollständig.

Zur Erzeugung der rotatorischen Bewegung wird der zweite Elektromotor 72 betätigt, wodurch das Befestigungsstück 62 und damit die daran befestigte Abdeckung 24 um die Drehachse D rotiert wird.

Denkbar ist selbstverständlich auch, dass die Antriebsvorrichtung 26 nur einen Elektromotor aufweist, der den ersten Elektromotor und den zweiten Elektromotor 64, 72 darstellt. Auch ist es denkbar, dass der eine bzw. der erste Elektromotor 64 und der zweite Elektromotor 72 weitere Bauteile der Unterbodenladeeinheit 12 antreibt.

Um die Abdeckung 24 aus der Schließposition (Fig. 5a) in die Öffnungsposition (Fig. 5c) zu überführen, wird somit zunächst der erste Elektromotor 64 betätigt bis die in Figur 5b gezeigte Stellung erreicht ist. Dann wird der erste Elektromotor 64 abgeschaltet und der zweite Elektromotor 72 aktiviert, sodass die Abdeckung 24 in die Öffnungsposition rotiert wird.

Um die Abdeckung 24 von der Öffnungsposition automatisiert in die Schließposition zu überführen, wird zunächst der zweite Elektromotor 72 aktiviert und anschließend der erste Elektromotor 64.

Dabei bewegt sich die Innenseite 50 der Abdeckung 24 zumindest teilweise, insbesondere vollständig über die Reinigungsvorrichtung 57, sodass Schmutz von der Innenseite 50 abgestreift wird und nicht ins Gehäuseinnere gelangt.

Sobald sich die Abdeckung 24 wieder innerhalb der Vertiefung 42 befindet, kann zum Erreichen der endgültigen Schließposition die Verschlussvorrichtung 52 aktiviert werden. Diese ist im Schnitt in Figur 7 dargestellt.

Die Verschlussvorrichtung 52 hat im gezeigten Ausführungsbeispiel ein Verriegelungselement 78, das in einen Verschlussbereich 80 an der Innenseite 50 der Abdeckung 24 eingreifen kann.

Im Verschlussbereich 80 ist in der Abdeckung 24 eine Verschlussvertiefung 102 vorgesehen, wobei ein Vorsprung 104 einseitig in die Verschlussvertiefung 102 vorspringt und somit einen Hinterschnitt erzeugt.

Der Vorsprung 104 kann durch eine in die Abdeckung 24 eingesetzte Platte 106 gebildet sein.

Außerdem, weist die Verschlussvorrichtung 52 eine Aufnahme 82 für das Verriegelungselement 78, einen Verschlussmotor 84, insbesondere einen Elektromotor und ein Zahnrad 86 auf.

Das Verriegelungselement 78 weist einen länglichen Grundkörper 88 mit einer Lippe 90 auf.

Die Lippe 90 ist an dem der Abdeckung 24 zugewandten Ende des Grundkörpers 88 vorgesehen und erstreckt sich radial nach außen. Die Lippe 90 umläuft den Grundkörper 88 jedoch nur teilweise.

Der Grundkörper 88 ist an dem der Lippe 90 entgegengesetzten Ende hohl ausgeführt und weist dort einen Führungsbolzen 94 auf, der sich radial nach innen erstreckt.

In der Aufnahme 82 der Verschlussvorrichtung 52 ist eine Bolzenführung 96 mit einer Kulisse 98 ausgebildet. Die Bolzenführung 96 wird in den Grundkörper 88 eingeführt und der Führungsbolzen 94 des Grundkörpers 88 greift in die Kulisse 98 ein.

Gleichzeitig ist an der Außenseite des Grundkörpers 88 ein Zahnrad 100 befestigt, das mit dem Zahnrad 86 kämmt.

Bei Betätigung des Verschlussmotors 84 wird somit der Grundkörper in Rotation versetzt, wodurch der Führungsbolzen 94 dem durch die Kulisse 98 vorgegebenen Weg folgt und somit den Grundkörper 88 bewegt.

Die Kulisse 98 hat zunächst einen in axialer Richtung verlaufenden ersten Abschnitt und einen daran anschließenden in Umfangsrichtung verlaufenden zweiten Abschnitt.

Zunächst läuft der Führungsbolzen 94 im ersten Abschnitt der Kulisse 98, sodass eine axiale Bewegung des Führungsbolzens 94 und somit des Grundkörpers 88 bei gleichzeitiger Rotation erreicht wird.

Dadurch kann der Grundkörper 88 zur Abdeckung 24 hin bewegt werden.

Die Kulisse 98 ist so ausgestaltet, dass wenn der Grundkörper 88 vollständig in die Verschlussvertiefung 102 eingreift, der erste Abschnitt vom Führungsbolzen 94 durchschritten ist und der Führungsbolzen nun lediglich im zweiten Abschnitt in Umfangsrichtung geführt wird. Das heißt, es findet nur noch eine Rotation des Grundkörpers 88 statt.

Der Grundkörper 88 und insbesondere die Lippe 90 rotiert somit in der Verschlussvertiefung 102, bis die Lippe 90 hinter den durch den Vorsprung erzeugten Hinterschnitt greift und somit die Abdeckung 24 arretiert ist.

Denkbar ist selbstverständlich auch, dass die Verschlussvorrichtung 52 in der Abdeckung 24 integriert ist. Beispielsweise können an der Abdeckung 24 Verschlussmittel vorgesehen sein, die in das Gehäuse 20 in der Schließstellung eingreifen.

Der Verschlussmotor 84 mitsamt der Bolzenführung 96 können als Aktuator angesehen werden, der dazu ausgebildet ist den Grundkörper 88 zunächst in axialer Richtung zur Abdeckung 24 hinzubewegen und anschließend zu rotieren.

Denkbar ist selbstverständlich auch, dass die Verschlussvorrichtung 52 magnetisch ist. In diesem Falle kann zum Beispiel in der Verschlussvorrichtung 52 ein Magnet und in der Abdeckung 24 ein magnetisches Gegenstück, wie ein ferromagnetisches Material oder ein Magnet, vorgesehen sein.

Der Magnet in der Verschlussvorrichtung 52 kann ein Elektromagnet sein, der zum Arretieren der Abdeckung 24 eingeschaltet wird. Denkbar ist auch, dass der Magnet der Verschlussvorrichtung 52 ein Permanentmagnet ist, wobei die Antriebsvorrichtung 26 die zwischen dem Permanentmagneten und dem magnetischen Gegenstück wirkende Magnetkraft überwinden kann.

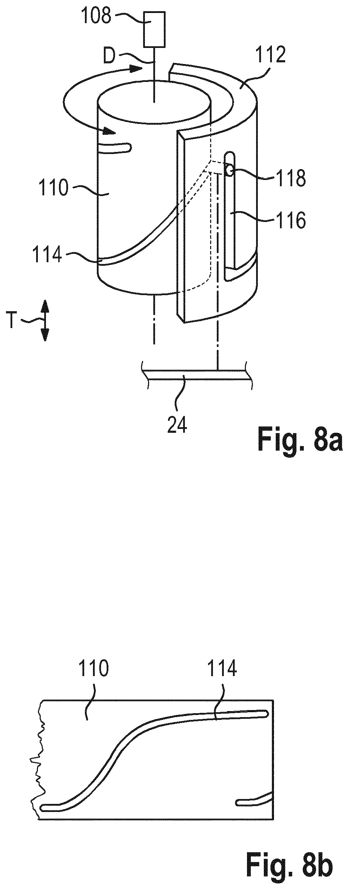

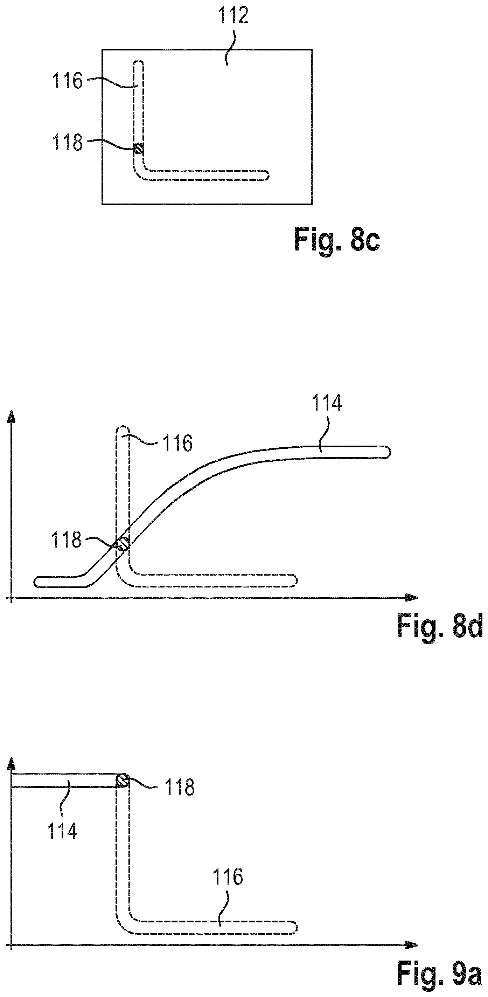

In den Figuren 8 bis 10 sind weitere Ausführungsformen der Unterbodenladeeinheit 12 teilweise beschrieben, die im Wesentlichen der ersten Ausführungsform gemäß den Figuren 1 bis 7 entspricht. Im Folgenden wird daher lediglich auf die Unterschiede eingegangen und gleiche und funktionsgleiche Teile sind mit denselben Bezugszeichen versehen.

In den Figuren 8a bis 8d ist ein Teil einer Antriebsvorrichtung 26 gemäß einer zweiten Ausführungsform dargestellt.

In dieser Ausführungsform weist die Antriebsvorrichtung lediglich eine einzige Baugruppe auf, die mit einem einzigen Elektromotor 108 angetrieben wird.

In dieser zweiten Ausführungsform weist die Antriebsvorrichtung 26 ein zylindrisches oder kegelförmiges Kulissenbauteil 110 auf, dass eine Gewindestange sein kann. Das Kulissenbauteil 110 ist von einer Kulissenwand 112 in Umfangsrichtung umgeben. Aus Gründen der Einfachheit ist in Figur 8a lediglich ein Teil der Kulissenwand 112 dargestellt.

Das Kulissenbauteil 110 ist gegenüber der Kulissenwand 112 rotierbar und kann beispielsweise vom Elektromotor 108 angetrieben werden.

Die Kulissenwand 112 ist ortsfest, d. h. sie ist gegenüber dem Gehäuse 20 unbeweglich.

An der Umfangswand des Kulissenbauteils 110 ist eine erste Kulisse 114 ausgebildet, die in Figur 8b abgerollt dargestellt ist.

Die erste Kulisse 114 verläuft an ihren beiden Enden im Wesentlichen waagrecht, d. h. in Umfangsrichtung. Die beiden Enden sind jedoch axial zueinander versetzt, sodass zwischen diesen Enden ein Abschnitt der ersten Kulisse 114 verläuft, der zumindest teilweise axial verläuft.

Im gezeigten Ausführungsbeispiel hat die erste Kulisse 114 in etwa eine S-Form.

Die Kulissenwand 112 weist eine zweite Kulisse 116 der Antriebsvorrichtung 26 auf, die dem Kulissenbauteil 110 zugewandt ist. Abgerollt ist diese Kulisse in Figur 8c dargestellt.

Gut zu erkennen ist, dass die zweite Kulisse 116 einen ersten, im Wesentlichen axial verlaufenden Abschnitt und einen zweiten, im Wesentlichen in Umfangsrichtung verlaufenden Abschnitt aufweist, wodurch die translatorische Bewegung und die rotatorische Bewegung der Abdeckung 24 getrennt voneinander erzeugt werden kann.

Die Enden der ersten Kulisse 114 liegen auf gleicher axialer Höhe mit den entsprechenden Enden der zweiten Kulisse 116.

Ein gemeinsamer Führungsbolzen 118 ist gleichzeitig in der ersten Kulisse 114 und in der zweiten Kulisse 116 eingesetzt, sodass dieser von beiden Kulissen 114, 116 zwangsgeführt ist.

Der Führungsbolzen 118 ist beispielsweise mittels des Befestigungsstücks 62 mit der Abdeckung 24 verbunden.

Dies bedeutet, dass die Abdeckung 24 die gleiche Bewegung wie der Führungsbolzen 118 absolviert.

Zur Erläuterung des Funktionsprinzips ist lediglich der einfachste Fall beschrieben.

Selbstverständlich kann die Kulissenwand 112 das Kulissenbauteil 110 auch vollständig in Umfangsrichtung umgeben. Dabei können zum Beispiel am Kulissenbauteil 110 zwei identische diametral gegenüberliegende erste Kulissen 114 und an der Kulissenwand 112 zwei identische diametral gegenüberliegende zweite Kulissen 116 vorgesehen sein. Das Kulissenbauteil 110 kann hierzu hohl ausgeführt sein.

In diesem Fall können zwei Führungsbolzen 118 vorhanden sein oder ein Führungsbolzen 118 erstreckt sich radial durch das Kulissenbauteil 110 und liegt in allen vier Kulissen 114, 116.

Denkbar ist selbstverständlich auch, dass die Kulissenwand 112 angetrieben wird und das Kulissenbauteil 110 ortsfest ist.

In Figur 8d sind die erste Kulisse 114 und die zweite Kulisse 116 überlagert dargestellt. Auch ist der Führungsbolzen 118 dargestellt, wobei eine Bewegung des Führungsbolzens 118 entlang der y-Achse einer axialen Bewegung des Führungsbolzens 118 und somit der Abdeckung 24 entspricht. Eine Bewegung des Führungsbolzens 118 entlang der x-Achse entspricht einer Bewegung des Führungsbolzens in Umfangsrichtung und somit einer Rotation des Führungsbolzens 118 und der Abdeckung 24 um die Drehachse D.

Dadurch, dass das Kulissenbauteil 110 gegenüber der Kulissenwand 112 bewegbar ist, ist auch die erste Kulisse 114 gegenüber der zweiten Kulisse 116 beweglich, sodass die in Figur 8d dargestellte Lage der beiden Kulissen 114, 116 zueinander veränderlich ist.

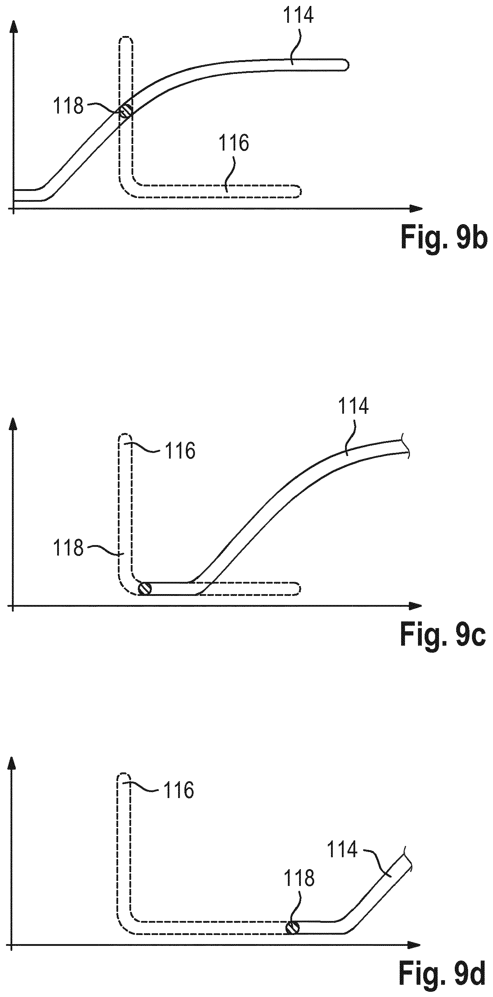

In den Figuren 9a bis 9d ist das Funktionsprinzip dieser Antriebsvorrichtung 26 gemäß der zweiten Ausführungsform veranschaulicht, wobei Figur 9a der Schließposition der Abdeckung 24 entspricht und Figur 9d der Öffnungsposition.

Wie in Figur 9a zu sehen, befindet sich der Führungsbolzen 118 zunächst an den jeweils oberen Enden der ersten Kulisse 114 und der zweiten Kulisse 116.

Wird nun das Kulissenbauteil 110 und damit die erste Kulisse 114, beispielsweise mittels des Elektromotors 108 gegenüber der Kulissenwand 112 rotiert, läuft der Führungsbolzen 118 die erste Kulisse 114 ab, da er in Umfangsrichtung durch die zweite Kulisse 116 an einer Bewegung gehindert wird.

Aufgrund des axial verlaufenden Abschnitts der ersten Kulisse 114 wird der Führungsbolzen 118, wie in Figur 9b zu sehen, axial durch den axialen Abschnitt der zweiten Kulisse 116 nach unten bewegt.

Während der Führungsbolzen 118 durch den ersten Abschnitt der zweiten Kulisse 116 läuft, absolvieren er und die Abdeckung 24 die vertikale, translatorische Bewegung in Translationsrichtung T.

Nach Abschluss des axial verlaufenden Abschnitts der ersten Kulisse 114 befindet sich der Führungsbolzen 118 in der zweiten Kulisse 116 am Übergang zwischen dem ersten, axialen Abschnitt und dem zweiten Abschnitt in Umfangsrichtung.

Werden das Kulissenbauteil 110 und die Kulissenwand 112 weiter relativ zueinander rotiert, erreicht der Führungsbolzen 118 in der ersten Kulisse 114 das Ende der ersten Kulisse 114 und wird dann, wie in Figur 9c zu sehen, vom Ende der ersten Kulisse 114 in Umfangsrichtung mitgenommen. In anderen Worten zieht das axial niedriger liegende Ende der ersten Kulisse 114 in den Führungsbolzen 118 nun durch den zweiten Abschnitt der zweiten Kulisse 116.

Währenddessen wird sowohl der Führungsbolzen 118 als auch die damit verbundene Abdeckung 24 um die Drehachse D rotiert, sodass die horizontale, rotatorische Bewegung erfolgt.

Zum Überführen der Abdeckung 24 von der Öffnungsposition in die Schließposition wird die Rotationsrichtung des Elektromotors 108 und damit die Rotationsrichtung des Kulissenbauteils 110 umgekehrt, wodurch der Führungsbolzen 118 die zweite Kulisse 116 in entgegengesetzter Richtung absolviert. Somit wird die Abdeckung 24 zunächst zurückrotiert und dann axial in die Vertiefung 42 hineinbewegt.

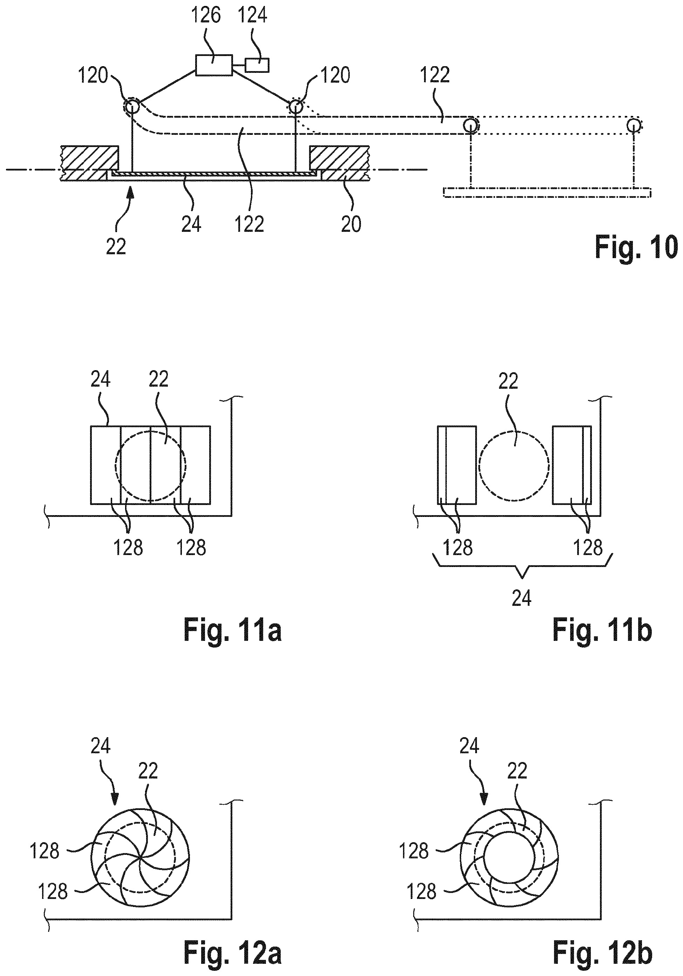

In Figur 10 ist eine dritte Ausführungsform der Antriebsvorrichtung 26 schematisch dargestellt.

In dieser dritten Ausführungsform ist die Abdeckung 24 mittels Führungsbolzen 120 in Kulissen 122 geführt.

Die Kulissen 122 erstrecken sich im Wesentlichen parallel zur Außenfläche 40 des Gehäuses 20 bzw. zur Unterbodenebene U. Lediglich an einem Ende, das der Schließposition zugeordnet ist, ist ein teilweise axial verlaufender Abschnitt vorgesehen.

Zur Bewegung der Abdeckung 24 werden die Führungsbolzen 120 bzw. das Befestigungsstück 62 translatorisch parallel zur Außenfläche 40 bewegt. Beispielsweise wird diese Bewegung durch einen einzigen Elektromotor 124 und einem Schraubgetriebe 126, beispielsweise einem Spindeltrieb, erzeugt. In Figur 10 ist die Abdeckung 24 in der geschlossenen Position vollständig dargestellt, in der Öffnungsposition mit einer strichpunktierten Linie.

Auch hier liegt die Abdeckung 24 in der Schließposition um einen Abstand näher an der Oberseite 37 als in der Öffnungsposition, wobei der Abstand größer als die Dicke der Abdeckung in vertikaler Richtung ist.

Aus der Schließposition heraus werden die Führungsbolzen 120 durch die Abschnitte der Kulissen 122, die auch in axialer Richtung verlaufen, zunächst auch in axialer Richtung bewegt, wodurch die translatorische Bewegung in Translationsrichtung T erreicht wird.

Anschließend erfolgt eine translatorische Bewegung parallel zur Außenfläche 40 bzw. zur Unterbodenebene U, um die Abdeckung 24 von der Kontaktierungsöffnung 22 zu entfernen und diese freizugeben.

In Figur 11 sind verschiedene weitere Ausführungsformen der Abdeckung 24 gezeigt. Die in den Figuren 11a und 11b gezeigten Abdeckungen 24 weisen mehrere Abdeckungsteile 128 auf, die zusammen die Abdeckung 24 bilden.

Die Abdeckungsteile 128 sind relativ zueinander bewegbar und können einander insbesondere überlappen, um die Kontaktierungsöffnung 22 freizugeben und somit die Öffnungsposition zu erreichen.

In Figur 11a sind die Abdeckungsteile 128 rechteckig und können übereinander geschoben werden (vgl. Figur 11b), um die Abdeckung freizugeben.

Das Überlappen kann derart erfolgen, dass der Massenschwerpunkt aller Abdeckungsteile 128 zusammen und damit der Massenschwerpunkt der Abdeckung 24 in der Schließposition näher an der Oberseite liegt als in der Öffnungsposition. Die ist zum Beispiel der Fall, wenn die Abdeckungsteile 128 übereinander verschoben werden.

In der Ausführungsform nach Figur 12 bilden die Abdeckungsteile 128 eine Abdeckung, die einer Irisblende gleicht, wobei die Irisblende in Figur 12a in Schließposition und in Figur 12d in geöffneter Position dargestellt ist.

Zur Arretierung der Abdeckung 24 und der Abdeckungsteile 128 können die Abdeckungsteile 128 Verschlussmittel aufweisen, die in der Schließposition ineinander eingreifen.

Die Merkmale der gezeigten Ausführungsformen lassen sich selbstverständlich beliebig miteinander kombinieren. Insbesondere können die verschiedenen gezeigten Abdeckungen mit den verschiedenen gezeigten Antriebsvorrichtungen Verwendung finden.

Die Bewegung der Abdeckung 24 wird in den verschiedenen Ausführungsformen stets mittels einer Führung geführt. Dies sind z. B. die Kulissen 114, 116 und 122 oder, wie in der ersten Ausführungsform, ein Wellenlager der Antriebsvorrichtung 26, z. B. ein Wellenlager, das das Befestigungsstück 62 stützt.

Die Dichtlippe 54 umläuft in einer Draufsicht auf die Kontaktierungsöffnung 22 von unten auch in der Schließstellung diese Führungen, um ein Verschmutzen der Führungen zu vermeiden.

Auch kann die Dichtlippe 54 in der Schließposition die Verschlussvorrichtung 52 umlaufen.

## Patentansprüche

1. Unterbodenladeeinheit, insbesondere für ein elektrisches Ladesystem für ein elektrisch angetriebenes Fahrzeug (10), mit einem Gehäuse (20), das eine Oberseite (37) und eine der Oberseite (37) entgegengesetzte Unterseite aufweist, wobei die Unterseite die vom Fahrzeug abgewandte Seite des Gehäuses (20) ist, wobei eine Kontaktierungsöffnung (22) an der Unterseite vorgesehen ist, einer Abdeckung (24) und einer Antriebsvorrichtung (26) zur Betätigung der Abdeckung (24), und mit einer Fahrzeugkontakteinheit (28) mit Kontakten (32), die im Gehäuse (20) angeordnet ist und die durch die Kontaktierungsöffnung (22) aus der Unterbodenladeeinheit (12) bewegbar ist,
wobei die Abdeckung (24) in einer Schließposition die Kontaktierungsöffnung (22) abdeckt und in einer Öffnungsposition die Kontaktierungsöffnung (22) freigibt,
wobei die Antriebsvorrichtung (26) dazu ausgebildet ist, die Abdeckung (24) aus der Schließposition in die Öffnungsposition sowie aus der Öffnungsposition in die Schließposition automatisiert zu bewegen,
wobei die Abdeckung (24) in der Schließposition näher an der Oberseite (37) liegt als in der Öffnungsposition,
wobei die Antriebsvorrichtung (26) dazu ausgebildet ist, die Abdeckung (24) von der Antriebsvorrichtung (26) rotatorisch um eine Drehachse (D) zu bewegen, **dadurch gekennzeichnet, dass**
die Unterbodenladeeinheit (12) einen Sensor (56) aufweist, der dazu ausgebildet ist, zu erkennen, ob die Abdeckung (24) in der Schließposition ist, und
dass ein Kontaktierungsaktuator (30) in Form eines pneumatisch betriebenen Faltenbalgs vorgesehen ist, der die Unterbodenladeeinheit (12) durch die Kontaktierungsöffnung (22) aus dem Gehäuse (20) so weit nach unten hinausbewegt, dass die Fahrzeugkontakteinheit (28) eine Bodenkontakteinheit (14) kontaktiert.

2. Unterbodenladeeinheit nach Anspruch 1, **dadurch gekennzeichnet, dass** die Antriebsvorrichtung (26) dazu ausgebildet ist, die Abdeckung (24) von der Antriebsvorrichtung (26) translatorisch zu bewegen, insbesondere wobei die Antriebsvorrichtung (26) dazu ausgebildet ist, die Abdeckung (24) zunächst translatorisch in eine Translationsrichtung (T) vom Gehäuseinneren weg zu bewegen und die Abdeckung (24) anschließend rotatorisch um eine Drehachse (D) in die Öffnungsposition zu bewegen, um die Abdeckung (24) aus der Schließposition in die Öffnungsposition zu überführen.

3. Unterbodenladeeinheit nach Anspruch 1 oder 2, **dadurch gekennzeichnet, dass** die Drehachse (D) senkrecht zur Abdeckung (24) und/oder zur Kontaktierungsöffnung (22) verlaufen.

4. Unterbodenladeeinheit nach einem der vorhergehenden Ansprüche, **dadurch gekennzeichnet, dass** die Abdeckung (24) mehrere Abdeckungsteile (128) aufweist, die relativ zueinander bewegbar sind, insbesondere einander überlappen.

5. Unterbodenladeeinheit nach einem der vorhergehenden Ansprüche, **dadurch gekennzeichnet, dass** die Kontaktierungsöffnung (22) durch einen Randbereich (46) des Gehäuses (20) begrenzt ist, wobei die Unterbodenladeeinheit (12) eine Dichtlippe (54) aufweist, die in der Schließposition zwischen der Abdeckung (24) und dem Randbereich (46) angeordnet ist und die die Kontaktierungsöffnung (22) umläuft, insbesondere vollständig umläuft.

6. Unterbodenladeeinheit nach einem der vorhergehenden Ansprüche, **dadurch gekennzeichnet, dass** die Unterbodenladeeinheit (12) eine Führung, insbesondere eine Kulisse (114, 116; 122) und/oder ein Wellenlager aufweist, die die Bewegung der Abdeckung (24) führt.

7. Unterbodenladeeinheit nach einem der vorhergehenden Ansprüche, **dadurch gekennzeichnet, dass** das Gehäuse (20) eine Außenfläche (40) mit einer Vertiefung (42) aufweist, wobei die Kontaktierungsöffnung (22) in der Vertiefung (42) vorgesehen ist, insbesondere wobei die Abdeckung (24) die gleiche Kontur wie die Vertiefung (42) hat.

8. Unterbodenladeeinheit nach einem der vorhergehenden Ansprüche, **dadurch gekennzeichnet, dass** die Antriebsvorrichtung (26) wenigstens eine Baugruppe (58, 60) zur Erzeugung der Bewegung der Abdeckung (24) aufweist, insbesondere wobei die Antriebsvorrichtung (26) eine erste Baugruppe (58) zur Erzeugung der translatorischen Bewegung und eine zweite Baugruppe (60) zur Erzeugung der rotatorischen Bewegung aufweist.

9. Unterbodenladeeinheit nach einem der vorhergehenden Ansprüche, **dadurch gekennzeichnet, dass** die Antriebsvorrichtung (26) eine erste Kulisse (114) und eine davon verschiedene zweite Kulisse (116) aufweist, in denen ein gemeinsamer Führungsbolzen (118) geführt ist, wobei die erste Kulisse (114) gegenüber der zweiten Kulisse (116) bewegbar ist.

10. Unterbodenladeeinheit nach einem der vorhergehenden Ansprüche, **dadurch gekennzeichnet, dass** die Unterbodenladeeinheit (12) eine Verschlussvorrichtung (52) zur Arretierung der Abdeckung (24) in der Schließposition aufweist, insbesondere wobei die Verschlussvorrichtung (52) in Bezug auf die Kontaktierungsöffnung (22) im Wesentlichen diametral gegenüber der Antriebsvorrichtung (26) angeordnet ist.

11. Unterbodenladeeinheit nach Anspruch 10, **dadurch gekennzeichnet, dass** die Abdeckung (24) einen Verschlussbereich (80), insbesondere eine Verschlussvertiefung (102) mit einem Hinterschnitt aufweist, der in der Schließposition im Bereich der Verschlussvorrichtung (52) angeordnet ist, insbesondere wobei die Verschlussvorrichtung (52) ein Verriegelungselement (78) aufweist, das in den Verschlussbereich (80), insbesondere den Hinterschnitt eingreift.

12. Unterbodenladeeinheit nach einem der vorhergehenden Ansprüche, **dadurch gekennzeichnet, dass** das Gehäuse (20) eine Außenfläche (40) aufweist, wobei an der Außenfläche (40) wenigstens eine Reinigungsvorrichtung (57), insbesondere eine Reinigungslamelle derart vorgesehen ist, dass die Innenseite (50) der Abdeckung (24) zumindest teilweise, insbesondere vollständig von der Reinigungsvorrichtung (57) gereinigt wird, wenn die Abdeckung (24) von der Öffnungsposition in die Schließposition und/oder von der Schließposition in die Öffnungsposition bewegt wird.

13. Fahrzeug mit einer Unterbodenladeeinheit (12) nach einem der vorhergehenden Ansprüche, wobei die Unterbodenladeeinheit (12) unterhalb des Fahrzeugs (10), insbesondere am Fahrzeugunterboden (18) vorgesehen ist.

## Claims

1. An underfloor charging unit, in particular for an electric charging system for an electrically driven vehicle (10), comprising a housing (20) having an upper side (37) and a lower side opposite to the upper side (37), the lower side being the side of the housing (20) facing away from the vehicle, a contacting opening (22) being provided on the lower side, a cover (24), and a driving device (26) for actuating the cover (24), and comprising a vehicle contact unit (28) having contacts (32), which is arranged in the housing (20) and which is adapted to be moved out of the underfloor charging unit (12) through the contacting opening (22),
the cover (24) covering the contacting opening (22) in a closed position and unblocking the contacting opening (22) in an open position,
the driving device (26) being configured to move the cover (24) from the closed position to the open position and from the open position to the closed position in an automated manner,
the cover (24), in the closed position, being located closer to the upper side (37) than in the open position,
the driving device (26) being configured to move the cover (24) from the driving device (26) rotationally about an axis of rotation (D), **characterized in that**
the underfloor charging unit (12) includes a sensor (56) which is configured to detect whether the cover (24) is in the closed position, and
**in that** a contacting actuator (30) in the form of a pneumatically operated bellows is provided, which moves the underfloor charging unit (12) downwards through the contacting opening (22) and out of the housing (20) to such an extent that the vehicle contact unit (28) contacts a ground contact unit (14).

2. The underfloor charging unit according to claim 1, **characterized in that** the driving device (26) is configured to move the cover (24) from the driving device (26) translationally, the driving device (26) being in particular configured to first move the cover (24) translationally in a direction of translation (T) away from the interior of the housing and then move the cover (24) rotationally about an axis of rotation (D) into the open position to transfer the cover (24) from the closed position to the open position.

3. The underfloor charging unit according to claim 1 or 2, **characterized in that** the axis of rotation (D) extends perpendicularly to the cover (24) and/or to the contacting opening (22).

4. The underfloor charging unit according to any of the preceding claims, **characterized in that** the cover (24) has a plurality of cover parts (128) which are movable relative to each other, in particular overlap each other.

5. The underfloor charging unit according to any of the preceding claims, **characterized in that** the contacting opening (22) is delimited by a marginal area (46) of the housing (20), the underfloor charging unit (12) having a sealing lip (54) which, in the closed position, is arranged between the cover (24) and the marginal area (46) and surrounds, in particular entirely surrounds the contacting opening (22).

6. The underfloor charging unit according to any of the preceding claims, **characterized in that** the underfloor charging unit (12) has a guide, in particular a slotted link (114, 116; 122) and/or a shaft bearing, which guides the movement of the cover (24).

7. The underfloor charging unit according to any of the preceding claims, **characterized in that** the housing (20) includes an outer surface (40) having a recess (42), the contacting opening (22) being provided in the recess (42), the cover (24) having in particular the same contour as the recess (42).

8. The underfloor charging unit according to any of the preceding claims, **characterized in that** the driving device (26) includes at least one assembly (58, 60) for generating the movement of the cover (24), the driving device (26) in particular including a first assembly (58) for generating the translational movement and a second assembly (60) for generating the rotational movement.

9. The underfloor charging unit according to any of the preceding claims, **characterized in that** the driving device (26) includes a first slotted link (114) and a different second slotted link (116) in which a common guide pin (118) is guided, the first slotted link (114) being movable relative to the second slotted link (116).

10. The underfloor charging unit according to any of the preceding claims, **characterized in that** the underfloor charging unit (12) has a closure device (52) for arresting the cover (24) in the closed position, the closure device (52) being in particular arranged substantially diametrically opposed to the driving device (26) with respect to the contacting opening (22).

11. The underfloor charging unit according to claim 10, **characterized in that** the cover (24) includes a closure area (80), in particular a closure recess (102) having an undercut which, in the closed position, is arranged in the region of the closure device (52), the closure device (52) in particular having a locking element (78) which engages in the closure area (80), in particular in the undercut.

12. The underfloor charging unit according to any of the preceding claims, **characterized in that** the housing (20) has an outer surface (40), at least one cleaning device (57), in particular a cleaning blade being provided on the outer surface (40) such that the inner side (50) of the cover (24) is at least partially, in particular fully cleaned by the cleaning device (57) when the cover (24) is moved from the open position to the closed position and/or from the closed position to the open position.

13. A vehicle comprising an underfloor charging unit (12) according to any of the preceding claims, the underfloor charging unit (12) being provided below the vehicle (10), in particular on the vehicle underfloor (18).

## Revendications

1. Unité de chargement sous le plancher, en particulier pour un système de chargement électrique pour un véhicule (10) à propulsion électrique, comprenant un boîtier (20) qui présente une face supérieure (37) et une face inférieure opposée à la face supérieure (37), la face inférieure étant la face du boîtier (20) qui est détournée du véhicule, une ouverture de mise en contact (22) étant prévue sur la face inférieure, un recouvrement (24) et un dispositif d'entraînement (26) pour actionner le recouvrement (24), et une unité de contact de véhicule (28) présentant des contacts (32), laquelle est agencée dans le boîtier (20) et est apte à être déplacée hors de l'unité de chargement (12) sous le plancher à travers l'ouverture de mise en contact (22),
le recouvrement (24) recouvrant, dans une position de fermeture, l'ouverture de mise en contact (22) et, dans une position d'ouverture, libérant l'ouverture de mise en contact (22),
le dispositif d'entraînement (26) étant réalisé de manière à déplacer le recouvrement (24) de façon automatisée de la position de fermeture à la position d'ouverture et de la position d'ouverture à la position de fermeture,
le recouvrement (24) étant plus proche de la face supérieure (37) dans la position de fermeture que dans la position d'ouverture,
le dispositif d'entraînement (26) étant réalisé de manière à déplacer le recouvrement (24) en rotation autour d'un axe de rotation (D) à partir du dispositif d'entraînement (26), **caractérisée en ce que**
l'unité de chargement (12) sous le plancher présente un capteur (56) qui est réalisé de manière à détecter si le recouvrement (24) est dans la position de fermeture, et
**en ce qu'**un actionneur de mise en contact (30) est prévu sous forme de soufflet à commande pneumatique qui déplace l'unité de chargement (12) sous le plancher vers le bas à travers l'ouverture de mise en contact (22) hors du boîtier (20) jusqu'à ce que l'unité de contact de véhicule (28) contacte une unité de contact de sol (14).

2. Unité de chargement sous le plancher selon la revendication 1, **caractérisée en ce que** le dispositif d'entraînement (26) est réalisé de manière à déplacer le recouvrement (24) en translation à partir du dispositif d'entraînement (26), le dispositif d'entraînement (26) étant en particulier réalisé de manière à déplacer le recouvrement (24) d'abord en translation dans un sens de translation (T) en éloignement de l'intérieur du boîtier, puis à déplacer le recouvrement (24) en rotation autour d'un axe de rotation (D) dans la position d'ouverture afin de faire passer le recouvrement (24) de la position de fermeture à la position d'ouverture.

3. Unité de chargement sous le plancher selon la revendication 1 ou 2, **caractérisée en ce que** l'axe de rotation (D) s'étend perpendiculairement au recouvrement (24) et/ou à l'ouverture de mise en contact (22).

4. Unité de chargement sous le plancher selon l'une des revendications précédentes, **caractérisée en ce que** le recouvrement (24) présente plusieurs parties de recouvrement (128) qui sont mobiles les unes par rapport aux autres, en particulier qui se chevauchent.

5. Unité de chargement sous le plancher selon l'une des revendications précédentes, **caractérisée en ce que** l'ouverture de mise en contact (22) est délimitée par une zone de bord (46) du boîtier (20), l'unité de chargement (12) sous le plancher comportant une lèvre d'étanchéité (54) qui, en position de fermeture, est agencée entre le recouvrement (24) et la zone de bord (46) et qui entoure l'ouverture de mise en contact (22), en particulier l'entoure complètement.

6. Unité de chargement sous le plancher selon l'une des revendications précédentes, **caractérisée en ce que** l'unité de chargement (12) sous le plancher comporte un guidage, en particulier une coulisse (114, 116 ; 122) et/ou un palier d'arbre guidant le mouvement du recouvrement (24).

7. Unité de chargement sous le plancher selon l'une des revendications précédentes, **caractérisée en ce que** le boîtier (20) présente une surface extérieure (40) avec un creux (42), l'ouverture de mise en contact (22) étant prévue dans le creux (42), le recouvrement (24) présentant en particulier le même contour que le creux (42).

8. Unité de chargement sous le plancher selon l'une des revendications précédentes, **caractérisée en ce que** le dispositif d'entraînement (26) présente au moins un ensemble (58, 60) pour générer le mouvement du recouvrement (24), le dispositif d'entraînement (26) présentant en particulier un premier ensemble (58) pour générer le mouvement en translation et un deuxième ensemble (60) pour générer le mouvement de rotation.

9. Unité de chargement sous le plancher selon l'une des revendications précédentes, **caractérisée en ce que** le dispositif d'entraînement (26) comprend une première coulisse (114) et une deuxième coulisse (116) différente de celle-ci, dans lesquelles est guidé un boulon de guidage commun (118), la première coulisse (114) étant mobile par rapport à la deuxième coulisse (116).

10. Unité de chargement sous le plancher selon l'une des revendications précédentes, **caractérisée en ce que** l'unité de chargement (12) sous le plancher comprend un dispositif de verrouillage (52) pour bloquer le recouvrement (24) dans la position de fermeture, le dispositif de verrouillage (52) étant en particulier agencé de manière sensiblement diamétralement opposée au dispositif d'entraînement (26) par rapport à l'ouverture de mise en contact (22).

11. Unité de chargement sous le plancher selon la revendication 10, **caractérisée en ce que** le recouvrement (24) présente une zone de fermeture (80), en particulier un creux de fermeture (102) présentant une contre-dépouille qui, en position de fermeture, est agencée dans la zone du dispositif de fermeture (52), le dispositif de fermeture (52) présentant en particulier un élément de verrouillage (78) qui s'engage dans la zone de fermeture (80), en particulier dans la contre-dépouille.

12. Unité de chargement sous le plancher selon l'une des revendications précédentes, **caractérisée en ce que** le boîtier (20) présente une surface extérieure (40), au moins un dispositif de nettoyage (57), en particulier une lamelle de nettoyage, étant prévu sur la surface extérieure (40) de sorte que la face intérieure (50) du recouvrement (24) est nettoyée au moins partiellement, en particulier complètement, par le dispositif de nettoyage (57) lorsque le recouvrement (24) est déplacé de la position d'ouverture à la position de fermeture et/ou de la position de fermeture à la position d'ouverture.

13. Véhicule comprenant une unité de chargement (12) sous le plancher selon l'une des revendications précédentes, l'unité de chargement (12) sous le plancher étant prévue sous le véhicule (10), en particulier sur le plancher du véhicule (18).
